Europäisches Patentamt

European Patent Office

Office européen des brevets

(19)

(11) Numéro de publication: **0 373 676**
**A2**

## (12) DEMANDE DE BREVET EUROPEEN

(21) Numéro de dépôt: 89123289.4

(22) Date de dépôt: 15.12.89

(51) Int. Cl.5: **H02H 9/04, H02H 3/33**

(30) Priorité: 16.12.88 ES 8803822

(43) Date de publication de la demande:
20.06.90 Bulletin 90/25

(84) Etats contractants désignés:
BE DE ES FR GB GR IT NL

(71) Demandeur: ALTERNET, S.A.
Po. Torras y Bages, 53
E-08030 Barcelona(ES)

(72) Inventeur: **Conrado, Valls Palou**
**Ronda del Canigo A 6-4 Urbanitzacio la**
**Mallola**
**E-08950 Esplugues de Llobregat(ES)**
Inventeur: **Emili, Chalaux Ferrer**
**Pi i Margall, 46**
**E-08025 Barcelona(ES)**

(74) Mandataire: **Duran Moya, Luis-Alfonso et al**
**c/o DURAN-CORRETJER Paseo de Gracia no.**
**101**
**E-08008 Barcelona(ES)**

(54) Appareil protecteur contre surtensions électriques.

(57) Appareil protecteur contre surtensions électriques qui comprend une étape à diodes Zener, varisteurs, déchargeurs de gaz ou d'autres composants dont l'impédance se reduit dès une tension donnée, assemblés en série et/ou en dérivation, avec un de ses bornes appliqué à un conducteur de sortie de l'interrupteur différentiel associé à l'alimentation du récepteur, tandis que l'autre borne de l'étape est appliqué à l'autre conducteur avant de l'entrée dans l'interrupteur différentiel, faisant la dérivation d'un courant de décharge à l'autre conducteur. L'appareil est applicable à la protection de récepteurs électriques qui ont besoin d'une alimentation uniforme et qui sont sensibles aux pointes de tension.

# APPAREIL PROTECTEUR CONTRE SURTENSIONS ELECTRIQUES

L'invention se réfère à un appareil protecteur contre surtensions électriques pour éliminer les pointes de tension dans les circuits d'alimentation d'autres appareils récepteurs électriques.

Il est connu que certains appareils électriques ont besoin d'une alimentation à une tension uniforme, parce que, donnée la configuration de ces circuits, une augmentation soudaine de la tension et, dans autres cas, une diminution rapide ou disparition de la tension, peut provoquer des conséquences nuisibles diverses: des dommages dans les composants des circuits, effacement des mémoires avec la conséquence de la perte des informations enregistrées, etc. C'est pour ça qu'on exige l'alimentation des appareils mentionnés, spécialment dans le domaine de l'informatique, l'électromédicine, les arts graphiques et d'autres, avec une tension d'alimentantion constante, ce qui ne peut pas être garanti avec le simple branchement de l'appareil au reseau d'alimentation.

L'appareil protecteur contre surtensions qui fait l'objet de ce brevet a pour but l'élimination des pointes de tension et des augmentations plus au moins prolonguées de la tension électrique avec une grande rapidité et securité.

On connaît déjà des appareils qui font cette fonction en faisant la dérivation à terre du courant dans le cas que la tension d'alimentation augmente dangereusement. Certains de ces appareils utilisent des varisteurs et la déviation du courant se fait à terre. La connection à terre est normalement désirable malgré que l'existence habituelle d'une résistance de contact est la raison de que la décharge de courant ait besoin d'un certain temps et l'interruption du courant par effet de la surtension se produit après d'un délai plus ou moins prolongué, ce qui est à toute façon indésirable, donné que pendant ce délai l'appareil qu'on désire protéger est soumis à une tension dangereuse.

L'appareil qui va être décrit fait utilisation aussi dans son structure des diodes Zener, varisteurs, déchargeurs de gaz ou d'autress composants avec une impédance qui se reduit dès une certaine tension, mais la déviation de courant ne se fait pas à terre, mais à un autre conducteur (qui peut être lui-même mis à terre dans la centrale électrique generatrice d'energie, à la ligne de distribution dès la centrale ou à la sortie du transformateur de couplement). Le courant dérivé reste appliqué à l'entrée de l'interrupteur différentiel de protection, qui normalement est couplé au circuit d'alimentation et non à la sortie de l'interrupteur mentionné comme se fait dans d'autres cas.

Pour garantir un fonctionnement correct de l'appareil et pour éviter des décharges indésirables, il pourra être convenable, dans certains cas, de mettre à l'entrée de l'appareil protecteur un transformateur avec plusieurs sorties pour faire l'adequation de la tension d'entrée à la tension nécessaire pour l'appareil protecteur.

Au même temps, il pourra aussi être désirable dans certains cas de coupler un autre transformateur à la sortie de l'appareil protecteur pour obtenir l'adéquation de la tension à la tension nécessaire pour les appareils a protéger.

L'appareil est equipé avec un ou plusieurs fusibles de protection à l'entrée.

L'appareil protecteur peut aussi avoir un dispositif pour son reposition automatique.

Pour faciliter la description, on a représenté dans le dessin, qui a une fonction d'illustration mais pas de limitation, une réalisation d'un appareil protecteur contre surtensions électriques d'accord avec les revendications.

Dans le dessin:

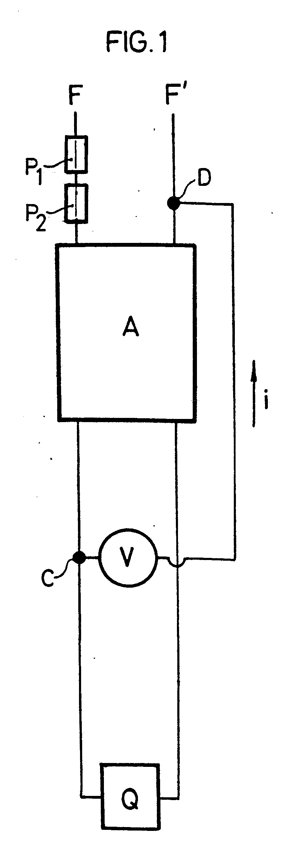

La figure 1 représente le circuit électrique de l'appareil de l'invention.

Les éléments numerotés dans le dessin corresponnent aux composants indiqués en ce qui suit.

Dans le circuit électrique de la figure 1, F représente une phase d'une ligne d'alimentation, et F' l'autre conducteur. $P_1$ et $P_2$ représentent des fusibles de protection, dont le nombre est variable. Le rectangle A représente un interrupteur différentiel du type destiné au débranchement rapide lorsque l'intensité électrique surpasse une certaine valeur prefixée, et Q est l'appareil ou installation à alimenter dûment protegé contre les surtensions.

Le cercle indiqué avec la lettre V représente une association de diodes Zener, varisteurs, déchargeurs de gaz ou des autres composants avec une impédance qui se reduit dès une tension donnée. Ces éléments peuvent être connectés en série et/ou en parallèle, en ayant un de ses bornes appliqué au point C, à l'issue de l'interrupteur, et l'autre borne au point D, à l'entrée du même interrupteur.

Il est caractéristique pour l'invention que l'étape V soit branchée au point D correspondant à l'autre conducteur, avant de l'entrée du conducteur à l'interrupteur différentiel A, de façon que, dans le cas de se produire à la sortie de l'interrupteur une surtension, s'origine un courant i dont la direction est marquée par la flèche, appliquée précisement à l'autre ligne conductrice, ce qui produit le débranchement pratiquement immédiat sans que la surtension puisse endommmager l'appareil ou installation Q.

Donné que dans la forme indiquée il n'existe pas virtuelment aucune resistance dans la dériva-

tion du courant, ne se peut pas produire une chute de tension avec le conséquent délai dans la circulation de courant, et en conséquence, dans le déclenchement de l'interrupteur différentiel.

Par exemple, dans le cas d'une tension de 220 V, le déclenchement de l'appareil se produit lorsque la tension arrive à une valeur minimale de 220 volts, plus ou moins une certaine tolerance. Cela signifie qu'on aura protection malgré que la tension d'alimentation n'arrive pas à la valeur théorique de 220 volts.

L'appareil surpasse parfaitement des essais de fatigue sans modification de caractéristiques.

Tout ce qui n'affecte, altère, change ou modifie le sens de l'appareil décrit, sera tenu variable aux effets de ce Brevet d'Invention.

## Revendications

1) Appareil protecteur contre des surtensions électriques, destiné à éliminer les pointes de tension dans circuits d'alimentation d'appareils électriques, caractérisé essentielment par comprendre une étape constituée par composants dont l'impédance se reduit dés une certaine tension, couplés en série et/ou en parallèle, avec un des bornes de l'étape connecté à un des conducteurs de sortie d'un interrupteur différentiel couplé aux deux bornes d'alimentation du récepteur à protéger, tandis que l'autre borne de l'étape des composants est appliqué precisement à l'autre conducteur avant de l'entrée dans l'interrupteur différentiel, comprennant aussi un ou plusieurs fusibles de protection à l'entrée de l'appareil protecteur.

2) Appareil protecteur contre surtensions électriques, d'accord avec la revendication 1, caractérisé en ce que les composants assemblés en série ou en parallèle sont des diodes Zener.

3) Appareil protecteur contre surtensions électriques, d'accord avec la revendication 1, caractérisé en ce que les composants assemblés en série ou en parallèle sont des varisteurs.

4) Appareil protecteur contre surtensions électriques, d'accord avec la revendication 1, caractérisé en ce que les composants assemblés en série ou en parallèle sont des déchargeurs de gaz.

5) Appareil protecteur contre surtensions électriques, d'accord avec la revendication 1, caractérisé en ce que à l'entrée et/ou à la sortie de l'appareil protecteur un transformateur fait l'adéquation de la tension du courant de la ligne et/ou du courant d'entrée de l'appareil à protéger.

6) Appareil protecteur contre surtensions électriques, d'accord avec les revendications anterieures, caractérisé par l'inclusion d'un système de reposition automatique.

# FIG.1